# EUROPEAN PATENT APPLICATION

(11) **EP 4 576 902 A1**
(43) Date of publication of application: **25.06.2025**
(21) Application number: 23854939.8
(22) Date of filing: 18.08.2023
(51) Int. Cl.: H04W 72/0446, H04W 16/02, H04W 16/14, H04W 84/12

(54) **COMMUNICATION DEVICE AND COMMUNICATION METHOD**

(30) Priority: 19.08.2022 JP 2022131164
(71) Applicant: Panasonic Intellectual Property Corporation of America, Torrance, CA 90504 (US)
(72) Inventor: IWAI, Takashi, Kadoma-shi, Osaka 571-0057 (JP); MOTOZUKA, Hiroyuki, Kadoma-shi, Osaka 571-0057 (JP); URABE, Yoshio, Kadoma-shi, Osaka 571-0057 (JP); TAKATA, Tomofumi, Kadoma-shi, Osaka 571-0057 (JP); KANAYA, Hiroyuki, Kadoma-shi, Osaka 571-0057 (JP)
(74) Representative: Grünecker Patent- und Rechtsanwälte PartG mbB
(86) International application number: PCT/JP2023/029821
(87) International publication number: WO 2024/038905

(57) **Abstract**

In the present invention, a non-access point station (non-AP STA) comprises: a control unit that generates a signal for allocating acquired resources for which an allocation period is designated; and a wireless transmission/reception unit that transmits the generated signal.

## Description

### Technical Field

The present disclosure relates to a communication apparatus and a communication method.

### Background Art

The technical specification of the Institute of Electrical and Electronics Engineers (IEEE) 802.11be (hereinafter referred to as "11be") is being developed as a successor to IEEE 802.11ax (hereinafter referred to as "11ax"), which is a standard of IEEE 802.11. The 11ax is also called High Efficiency (HE), and the 11be is also called Extreme High Throughput (EHT). Further, discussions on the requirements for the successor standard to the 11be are also ongoing. Hereinafter, the successor standard to the 11be will be referred to as "Beyond 11be."

### Citation List

### Non-Patent Literature

NPL 1
   IEEE 802.11-22/0729r1
NPL 2
   IEEE 802.11-22/0734r0
NPL 3
   IEEE 802.11-20/0005r1
NPL 4
   IEEE 802.11-21/0894r6
NPL 5
   IEEE 802.11-21/2032r2
NPL 6
   IEEE P802.11-REVme^{™}/D1.3, June 2022
NPL 7
   IEEE P802.11be^{™}/D2.0, May 2022

### Summary of Invention

However, details of a resource allocation method including TXOP Sharing from a Non-AP to an AP have not been discussed.

A non-limiting embodiment of the present disclosure facilitates providing a communication apparatus and a communication method each capable of enhancing transmission efficiency in radio communication.

A Non-Access Point Station (Non-AP STA) according to an embodiment of the present disclosure includes: a controller, which in operation, generates a signal indicating allocation of an acquired resource whose allocation period has been specified; and a radio transceiver, which in operation, transmits the generated signal.

It should be noted that general or specific embodiments may be implemented as a system, an apparatus, a method, an integrated circuit, a computer program, a storage medium, or any selective combination thereof.

According to an embodiment of the present disclosure, it is possible to enhance, for example, the transmission efficiency in radio communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1A illustrates an exemplary configuration of a MAC frame;
FIG. 1B illustrates an exemplary configuration of an HT Control field;
FIG. 1C illustrates an exemplary configuration of an A-Control subfield;
FIG. 1D illustrates an exemplary configuration of a Control List;
FIG. 1E illustrates an exemplary configuration of a Control Information subfield;
FIG. 2 illustrates an exemplary configuration of a CAS Control subfield;
FIG. 3 illustrates an exemplary Trigger frame;
FIG. 4 illustrates an exemplary configuration of a Common Info field;
FIG. 5 illustrates an exemplary configuration of a User Info field in a MU-RTS TXS Trigger frame;
FIG. 6 illustrates an exemplary configuration of a Special User Info field;
FIG. 7 is a block diagram illustrating an exemplary configuration of Non-AP 100;
FIG. 8 is a block diagram illustrating an exemplary configuration of AP 200;
FIG. 9 illustrates an exemplary indication of a TXOP allocation period;
FIG. 10 is a sequence diagram for the indication of RDG and the allocation period;
FIG. 11 illustrates an exemplary Trigger frame format for Non-AP transmission;
FIG. 12 illustrates an exemplary Common Info field for Non-AP transmission;
FIG. 13 illustrates an exemplary User Info field for MU-RTS TXS for Non-AP transmission;
FIG. 14 is a diagram illustrating an operation in which Non-AP 100 acquires the transmission right for TXOP sharing control information and allocates the information to AP 200;
FIG. 15 is a diagram illustrating an operation in which Non-AP 100 acquires the transmission right for data and TXOP sharing control information and allocates the data and information to AP 200;
FIG. 16 illustrates an exemplary configuration of an RD protocol;
FIG. 17 is a sequence diagram of the permission of communication with Non-AP different from Non-AP 100;
FIG. 18 is a sequence diagram in which AP 200, which is an RD responder, indicates uplink transmission to Non-AP different from Non-AP 100 using a Trigger frame;
FIG. 19 illustrates an exemplary configuration of an MU-RTS TXS Trigger frame;
FIG. 20 is a sequence diagram in which Non-AP 100 transmits an MU-RTS TXS Trigger frame including a transmission destination of AP 200 in an allocation period and indicates TXOP Sharing to AP 200;
FIG. 21 illustrates an exemplary configuration of an RD protocol;
FIG. 22 illustrates an exemplary configuration of an MU-RTS TXS Trigger frame;
FIG. 23 is a sequence diagram in which Non-AP 100 transmits an MU-RTS TXS Trigger frame including a type of traffic communicable in the allocation period and indicates TXOP Sharing to AP 200;
FIG. 24 is a sequence diagram in which Non-AP 100 that has performed TXOP sharing re-acquires TXOP in a case where Low Latency traffic held by AP is low;
FIG. 25 is a sequence diagram in a case where the priority of data held by AP 200 is lower than the priority of data held by Non-AP 100;
FIG. 26 is a sequence diagram in a case where the priority of data held by AP 200 is higher than the priority of data held by Non-AP 100;
FIG. 27 illustrates a new configuration example of an HT Control field; and
FIG. 28 illustrates a new configuration example of an HT Control field.

### Description of Embodiments

Embodiments of the present disclosure will be described in detail with reference to the drawings.

In the 11be and Beyond 11be, the necessity for further reduction in latency (low latency) has been proposed (see, for example, NPLs 1 to 2), assuming use cases such as gaming and virtual reality (VR).

In the 11be, as in the 11ax, a priority control scheme called Enhanced Distributed Channel Access (EDCA) may be used to prioritize transmission opportunities for each access category (AC). In EDCA, for example, an AC that has once acquired the transmission right can continuously transmit a radio signal with a minimum waiting time (SIFS: Short Inter Frame Space) interval. The time during which this continuous transmission is possible may be referred to as a "Transmission Opportunity (TXOP)." The time limit of TXOP may be individually defined for AC, for example.

For the purpose of low latency, it is considered that TXOP acquired by a Non-AP (Non-Access Point Station, also referred to as a terminal. Hereinafter, referred to as Non-AP) is assigned (TXOP sharing) from the Non-AP STA to an AP STA (Access Point Station, also referred to as a base station. Hereinafter, referred to as AP) (for example, see NPLs 3 to 5).

In IEEE 802.11n (hereinafter referred to as 11n), TXOP Sharing from an RD (Reverse direction) initiator to an RD responder by an RD protocol has been introduced (see, for example, NPL 6).

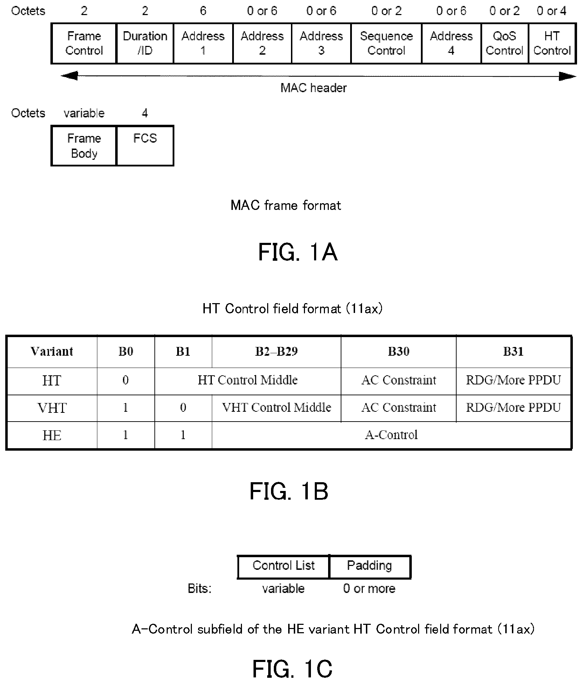

The RD protocol is controlled by a High Throughput (HT) Control field included in a Medium Access Control (MAC) header in a MAC frame illustrated in FIG. 1A.

As illustrated in FIG. 1B, in the 11ax and 11be, the RD protocol is controlled by an A-Control subfield included in a HT Control field.

Specifically, as illustrated in FIG. 1C, the A-Control subfield includes a Control List.

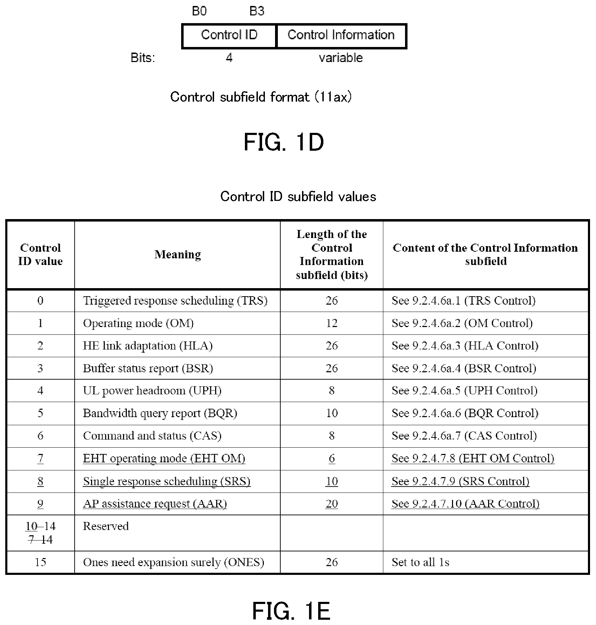

As illustrated in FIG. 1D, the Control List includes a Control ID subfield and a Control Information subfield.

As illustrated in FIG. 1E, the format (transmission information, size, and number of subfields to be included in the A-Control subfield) of the Control Information subfield varies depending on the value of the Control ID subfield.

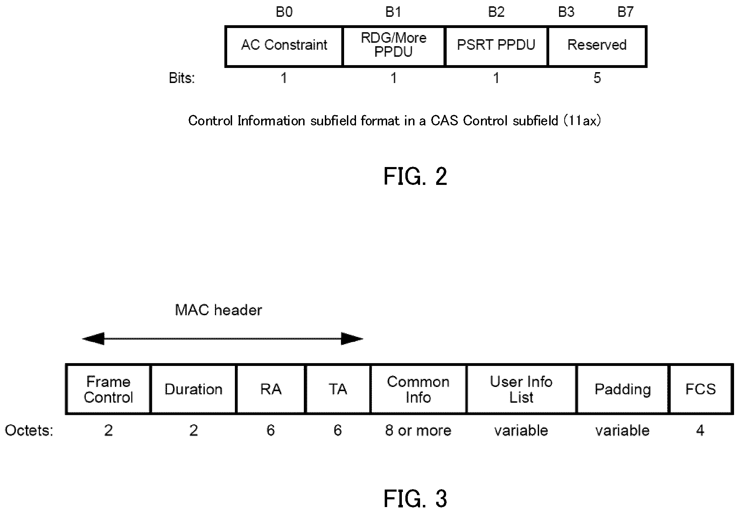

In a case where the value of the Control ID subfield indicates Command and status (CAS) (Control ID value = 6), the Control Information subfield becomes a CAS Control subfield defined in the format illustrated in FIG. 2. The RD protocol is controlled by changing the value of the RDG/More PPDU subfield in the CAS Control subfield in FIG. 2. Both the RD initiator and the RD responder use the RDG/More PPDU subfield, but the RD initiator controls the value of the subfield with the intention of RD Grant (RDG), while the RD responder controls the value of the subfield with the intention of More PPDU.

The RD initiator that has acquired the TXOP transmits a Physical layer Protocol Data Unit (PPDU) with the value of the RDG subfield set to 1 (RDG subfield = 1), thereby permitting the RD responder, which is the transmission destination, to transmit in the remaining TXOP period acquired by the RD initiator. The RD responder transmits a PPDU (also referred to as a Response Burst) including a PPDU for the RD initiator in the allocated TXOP period (remaining TXOP period). In a case where the RD responder continues PPDU transmission in the allocation period, the RD responder transmits a PPDU in which the value of the More PPDU subfield is set to 1 (More PPDU subfield = 1). When there is no more data to be transmitted and the RD responder transmits the last PPDU in the allocated TXOP period, the RD responder transmits a PPDU in which the value of the More PPDU subfield is set to 0 (More PPDU subfield = 0). Thus, the RD responder can return the TXOP to the RD initiator.

In TXOP Sharing by a Multi-User Request-To-Send (MU-RTS) TXOP Sharing (TXS) Trigger frame introduced in the 11be, a part of the TXOP acquired by the AP can be subjected to TXOP sharing to Non-AP (see, for example, NPL 7).

In the 11be, for example, it has been considered that AP indicates TXOP sharing to one STA using a Trigger frame in which MU-RTS is configured as a type of the Trigger frame (for example, referred to as "Trigger Type") (see, for example, NPL 7). Hereinafter, a Trigger frame that indicates TXOP sharing will be referred to as an "MU-RTS TXS Trigger frame."

FIG. 3 illustrates an exemplary Trigger frame. As illustrated in FIG. 3, the Trigger frame includes a field (for example, Common Info field) that includes information common to a plurality of Non-APs that are frequency division multiplexed (FDM), and a field referred to as a User Info List. The User Info List may include, for example, one or more fields (for example, User Info field) that include information specific (or unique) to Non-AP.

Further, in the 11be, for example, a field (for example, "Special User Info field") including information for a terminal supporting the 11be (EHT) may be included in the Trigger frame (not illustrated).

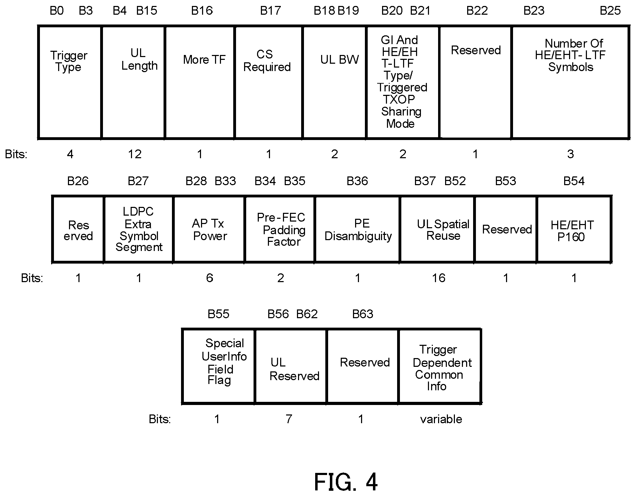

FIG. 4 illustrates an exemplary configuration of a Common Info field discussed in the 11be (see, for example, NPL 7).

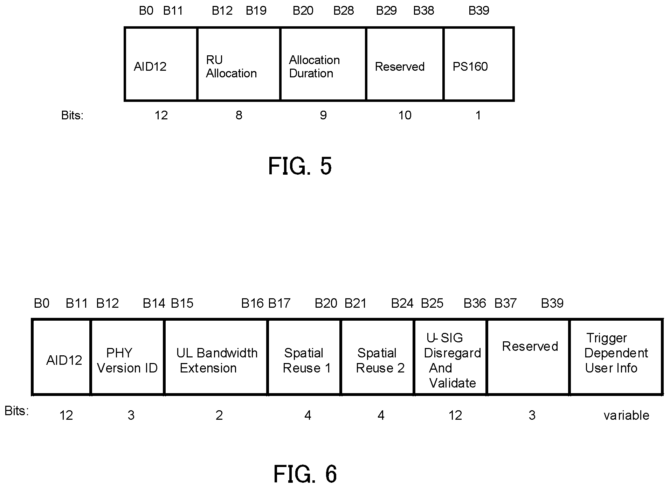

FIG. 5 illustrates an exemplary configuration of a User Info field in a MU-RTS TXS Trigger frame discussed in the 11be (see, for example, NPL 7).

FIG. 6 illustrates an exemplary configuration of a Special User Info field (see, for example, NPL 7).

For example, the Trigger Type subfield in the Common Info field illustrated in FIG. 4 is a subfield that indicates the type of the Trigger frame (for example, the type of signal that the AP causes the Non-AP to transmit). For example, AP can indicate the MU-RTS TXS Trigger frame to a predetermined Non-AP by configuring the value of Trigger Type to a value indicating MU-RTS (for example, in the case of the 11be, Trigger Type subfield value = 3) and by configuring the value of the Triggered TXOP Sharing Mode subfield in the Common Info field to a predetermined value.

When Non-AP receives, for example, an MU-RTS TXS Trigger frame and the Association Identifier (AID) of the Non-AP is specified in the User Info field included in the received MU-RTS TXS Trigger frame, the Non-AP transmits a Clear To Send (CTS) frame to AP to indicate the start of TXOP Sharing, and transmits a PPDU in the subsequent allocation period. Since only the AP can transmit the Trigger frame, TXOP Sharing cannot be performed from a Non-AP.

The detailed discussion for the allocation of the TXOP acquired by a Non-AP to an AP is not sufficient.

### (Embodiment 1)

In Embodiment 1, a Non-AP allocates a part of the acquired resource (TXOP) to an AP. A method for efficiently performing communication in an allocation period from a non-AP to an AP and a method for performing communication depending on the priority of traffic will be described.

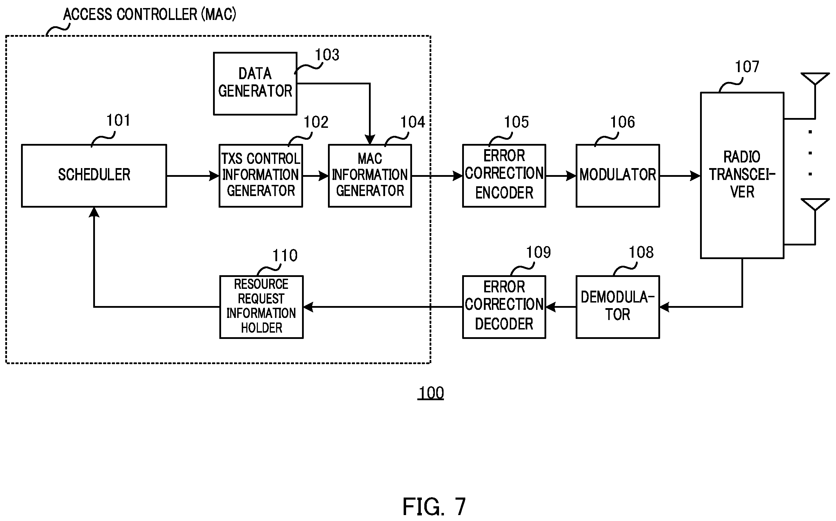

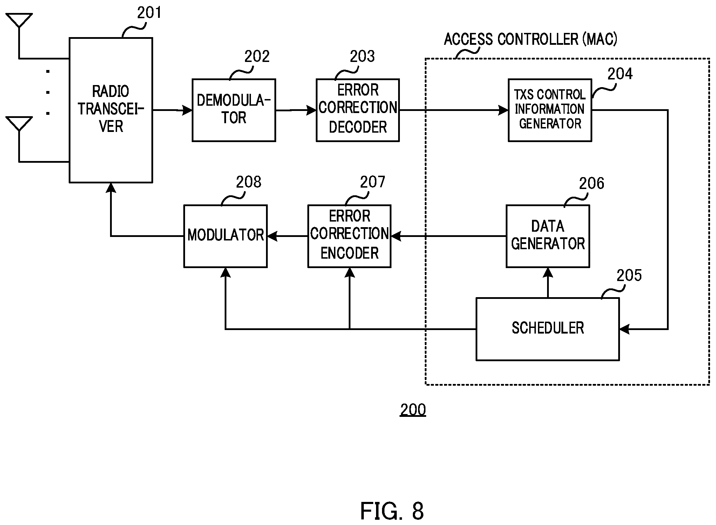

The radio communication system according to Embodiment 1 includes, for example, Non-AP 100 illustrated in FIG. 7 and AP 200 illustrated in FIG. 8.

### [Configuration Example of Non-AP 100]

FIG. 7 is a block diagram illustrating an exemplary configuration of Non-AP 100.

Non-AP 100 illustrated in FIG. 7 may include, for example, scheduler 101, TXS control information generator 102, data generator 103, MAC information generator 104, error correction encoder 105, modulator 106, radio transceiver 107, demodulator 108, error correction decoder 109, and resource request information holder 110.

For example, scheduler 101, TXS control information generator 102, data generator 103, MAC information generator 104, and resource request information holder 110 may be included in an access controller (for example, MAC).

For example, at least one of scheduler 101, TXS control information generator 102, data generator 103, MAC information generator 104, error correction encoder 105, modulator 106, demodulator 108, error correction decoder 109, and resource request information holder 110 may be a controller.

Non-AP 100 may transmit a PPDU including a control signal (for example, MAC information defined in a format based on an RDG or an MU-RTS TXS Trigger frame) indicating TXOP Sharing to AP 200. AP 200 may receive a control signal indicating TXOP Sharing and transmit a signal to the Non-AP that has performed Sharing, another Non-AP, or an AP that performs another coordination, based on the allocation period. AP 200 may be an AP (also referred to as an Associated AP) to which Non-AP 100 is connected. Further, AP 200 may be any AP of a plurality of APs that perform coordinated transmission with Non-AP 100.

Scheduler 101 performs scheduling for AP 200, for example. For example, scheduler 101 may determine control information for TXOP Sharing to be applied to AP 200 (such as the allocation period, the communication destination in the allocation period, the type of traffic (TID: Traffic Identifier) communicable in the allocation period) based on the buffer information held by AP 200 and inputted from resource request information holder 110.

The allocation period for AP 200 may be a part of the period of the TXOP acquired by Non-AP 100.

Further, the communication destination in the allocation period may include, in addition to control limited to communication with Non-AP 100, control that does not include Non-AP 100. For example, AP 200 may communicate with another Non-AP different from Non-AP 100 or another AP different from AP 200 (for example, any AP that performs coordinated transmission).

Further, as a type of traffic (TID) communicable in the allocation period, traffic with a high priority (for example, Low Latency traffic) may be indicated. Thus, it is possible to transmit only traffic with a high priority during the allocation period for the AP.

Scheduler 101 outputs, for example, the determined control information on TXOP sharing for AP 200 to TXS control information generator 102.

TXS control information generator 102 may generate TXS control information in a predetermined MAC frame format. The TXS control information may generate, for example, MAC data (also referred to as a MAC Protocol Data Unit (MPDU)) including TXS control information in a format based on an RDG or an MU-RTS TXS Trigger frame. Details will be described later.

TXS control information generator 102 may output the MAC data including TXS control information to MAC information generator 104.

Data generator 103 may generate MAC data (for example, data in an MPDU format) to be transmitted to AP 200, and may output the generated data to MAC information generator 104. Note that, in a case where Non-AP 100 does not hold the data to be transmitted to AP 200, no data may be outputted to MAC information generator 104.

MAC information generator 104 combines the MAC data including the TXS control information from TXS control information generator 102 and the MAC data including the data signal from data generator 103, and outputs the combined data to error correction encoder 105. Note that MAC data in which a plurality of types of MAC data are combined is sometimes referred to as an Aggregated MPDU (A-MPDU).

Error correction encoder 105 may, for example, error correction encode the MAC data inputted from MAC information generator 104, and output the encoded signal to modulator 106.

Modulator 106 may, for example, perform modulation processing on the signal inputted from error correction encoder 105, and output the modulated signal to radio transceiver 107.

Note that, in a case where the modulated data signal is an orthogonal frequency division multiplexing (OFDM) signal, Non-AP 100 may form the OFDM signal by mapping the modulated signal to a defined frequency resource, performing inverse fast Fourier transform (IFFT) processing to convert the signal into a time waveform, and adding a cyclic prefix (CP).

Radio transceiver 107 may perform radio transmission processing such as D/A conversion and up-conversion to a carrier frequency on the modulated signal inputted from modulator 106, and may transmit the signal after the radio transmission processing to AP 200 via an antenna. Further, radio transceiver 107 may, for example, receive a signal transmitted from AP 200 via an antenna, perform radio reception processing such as down-conversion to a baseband and A/D conversion on the received signal, and output the signal after the radio reception processing to demodulator 108.

Demodulator 108 may, for example, perform demodulation processing on the signal inputted from radio transceiver 107, and may output the demodulated signal to error correction decoder 109. Note that, in a case where the signal inputted to demodulator 108 is an OFDM signal, Non-AP 100 may perform CP removal processing and fast Fourier transform (FFT) processing.

Error correction decoder 109, for example, decodes the signal inputted from demodulator 108 to obtain the received data signal from AP 200. In a case where the decoded received data includes resource request information of AP, error correction decoder 109 may, for example, output the decoded data including the resource request information of AP to resource request information holder 110.

Resource request information holder 110 may acquire (or hold) the resource request information of AP from the decoded data inputted from error correction decoder 109, and may output the acquired resource request information to scheduler 101. The resource request information of AP may be, for example, at least one of whether AP 200 requests resource allocation to Non-AP 100, the request time for resource allocation in a case of a predetermined bandwidth (for example, 20 MHz), and/or information on a buffer state held by AP 200 (for example, at least one of a destination of the held buffer, AC or TID of the held buffer, a queue size of each AC and TID, a delay budget (delay tolerance range), and/or the like). Further, as the resource request information, buffer status information held by AP 200 and addressed to a Non-AP other than Non-AP 100 may be included.

### [Configuration Example of AP 200]

AP 200 receives, for example, from Non-AP 100, a PPDU including a control signal indicating TXOP Sharing. Then, AP 200 performs communication of a permitted traffic type with a permitted transmission destination within the allocation period based on a control signal indicating TXOP Sharing. Further, AP 200 indicates resource request information of AP 200 to Non-AP 100 at a predetermined timing.

FIG. 8 is a block diagram illustrating an exemplary configuration of AP 200.

AP 200 illustrated in FIG. 8 may include, for example, radio transceiver 201, demodulator 202, error correction decoder 203, TXS control information acquirer 204, scheduler 205, data generator 206, error correction encoder 207, and modulator 208.

For example, TXS control information acquirer 204, scheduler 205, and data generator 206 may be included in an access controller (for example, MAC).

Radio transceiver 201 may, for example, receive a reception signal with an antenna, perform radio reception processing such as down-conversion and A/D conversion on the reception signal, and output the signal after the radio reception processing to demodulator 202. Further, radio transceiver 201 may perform radio transmission processing such as up-conversion and D/A conversion on a signal inputted from, for example, a modulator, and may transmit the signal after the radio transmission processing from an antenna.

Demodulator 202 may perform demodulation processing on the reception data inputted from, for example, the radio transceiver, and may output the demodulated signal to error correction decoder 203. Note that, in a case where the signal inputted to demodulator 202 is an OFDM signal, AP 200 may perform, for example, CP removal processing and FFT processing.

Error correction decoder 203 may, for example, decode the demodulated signal inputted from demodulator 202 and output the decoded signal as a received data signal. Further, error correction decoder 203 may, for example, output MAC data including TXS control information, which is part of the received data signal, to TXS control information acquirer 204.

TXS control information acquirer 204 may extract TXS control information from, for example, MAC data inputted from error correction decoder 203, and may acquire control information related to TXOP sharing (at least one of an allocation period, a communication destination in the allocation period, a type of traffic (TID) communicable in the allocation period, and/or the like). TXS control information acquirer 204 may output the extracted control information related to TXOP sharing to scheduler 205.

Scheduler 205 may determine at least one of the signal length of data that can be transmitted in the allocation period, the transmission destination, and the type of traffic to be transmitted, based on the control information related to TXOP sharing inputted from TXS control information acquirer 204. Further, the radio parameter (at least one of signal length, modulation scheme, error correction coding rate, spatial multiplexing number, transmission power, and/or the like) to be applied to the transmission data may be determined and outputted to data generator 206, error correction encoder 207, and modulator 208.

Data generator 206 may generate a data signal based on the radio parameter inputted from the scheduler, and may output the data signal to error correction encoder 207.

Error correction encoder 207 may perform error correction encoding on the data signal inputted from data generator 206 and output the encoded signal to modulator 208.

Modulator 208 may modulate the signal inputted from error correction encoder 207 and output the modulated signal to radio transceiver 201. Further, in a case where the modulation signal is an OFDM signal, AP 200 may perform IFFT processing after mapping the modulation signal to the frequency resource and add a CP to form the OFDM signal.

### [Operation Example]

An operation example of Non-AP 100 and AP 200 according to Embodiment 1 will be described.

Two exemplary operations will be described: Operation Example 1, in which a Non-AP includes TXS information including an allocation period in an HT Control field with RDG and transmits the TXS information to AP 200; and Operation Example 2, in which a Non-AP includes the TXS information in an MU-RTS TXS Trigger frame and transmits the TXS information to AP 200.

A Non-AP controlling the allocation period enhances transmission efficiency.

### [Operation Example 1]

Hereinafter, an example will be described in which Non-AP 100 (for example, TXS control information generator 102) generates control information for TXOP Sharing and transmits the control information to AP 200, and Non-AP 100 allocates a part of the acquired TXOP to AP 200.

The TXS control information generated by TXS control information generator 102 may include an allocation period from Non-AP 100 to AP 200. The allocation period may be a part of the period of the TXOP acquired by Non-AP 100. For example, TXS control information including the allocation period may be indicated in association with control information (RDG) of the RD protocol.

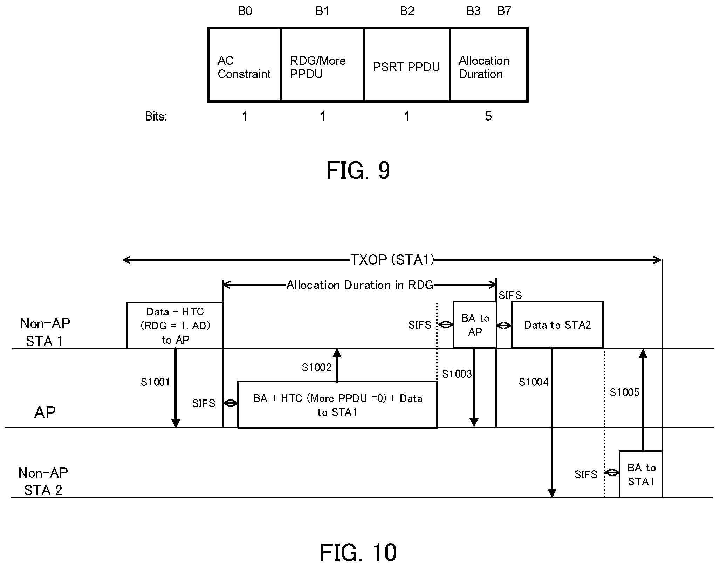

Specifically, as illustrated in FIG. 9, the allocation period of the TXOP allocated to AP 200 may be indicated by configuring the Reserved bit in the Control Information subfield in FIG. 2 as the Allocation Duration subfield. For example, an allocation period with a predetermined granularity (for example, in units of 16 [us (microseconds)]) may be indicated. Alternatively, the allocation period may be defined with a different granularity (for example, a unit larger than 16 [us] or a unit smaller than 16 [us]). The granularity may be determined in consideration of the amount of signaling. Alternatively, a ratio (for example, in units of X%) of the remaining period of the TXOP acquired by Non-AP 100 (the time indicated in the Duration field of the MAC header) may be indicated. Note that the allocation period to be indicated may include an indication that the entire remaining period of the TXOP acquired by Non-AP 100 is allocated.

In a case where control to always limit the allocation period to the entire remaining period of the TXOP is performed, the remaining period of the TXOP is indicated in the Duration field of the MAC header, and thus, indication of the Allocation Duration subfield in the Control Information subfield is not necessary.

FIG. 10 illustrates an example of a sequence in which Non-AP 100 (Non-AP STA1 in FIG. 10), which is an RD initiator, notifies AP 200 (AP in FIG. 10), which is an RD responder, of RDG and the allocation period, and indicates TXOP sharing to AP 200.

FIG. 10 illustrates an operation in which Non-AP 100 acquires the transmission right for data and TXOP sharing control information ("Data + HTC" in the figure), configures the TXOP, and allocates a part of or entire remaining TXOP to AP 200 (performs TXOP sharing).

FIG. 10 illustrates an example in which Non-AP 100 transmits, in addition to the uplink data to AP 200, TXS control information in which RDG = 1 is configured and the allocation period ("Allocation Duration in RDG" in FIG. 10) is included in AD using the format illustrated in FIG. 9 (S1001), and indicates TXOP Sharing to AP 200. The allocation period is configured based on the resource request information of AP 200 acquired from AP 200 in advance.

Non-AP 100 considers the buffer state (size, etc.) of traffic with a high priority addressed to Non-AP 100 itself, calculates the period necessary for transmitting the traffic, and configures the allocation period. AP 200 communicates in the allocation period indicated by Non-AP 100.

In a case where the last PPDU is transmitted in the allocation period, the value of the More PPDU subfield is set to 0 (More PPDU = 0) (S1002). Non-AP 100 transmits a Block Ack (BA) to AP 200 as an acknowledgement (ACK) (S1003), and after the allocation period to AP 200 ends, Non-AP 100 which has acquired the TXOP acquires the remaining TXOP again. FIG. 10 illustrates an example in which Non-AP 100 transmits data to another Non-AP STA2 in the remaining period of the TXOP acquired again (S1004), and Non-AP STA2 transmits a BA to Non-AP 100 (S1005).

### [Operation Example 2]

For example, TXS control information including an allocation period may be included in an MU-RTS TXS Trigger frame for Non-AP transmission and may be indicated. For example, the allocation period of the TXOP allocated to AP 200 may be indicated in the Allocation Duration subfield of the User Info field illustrated in FIG. 5. For example, an allocation period with a predetermined granularity (for example, in units of 16 [us]) may be indicated. Alternatively, the allocation period may be defined with a different granularity (for example, a unit larger than 16 [us] or a unit smaller than 16 [us]). The granularity may be determined in consideration of the amount of signaling. Note that the allocation period to be indicated may include an indication of allocating the entire remaining period of the TXOP acquired by Non-AP 100, instead of allocating only a part of the period of the TXOP acquired by Non-AP 100.

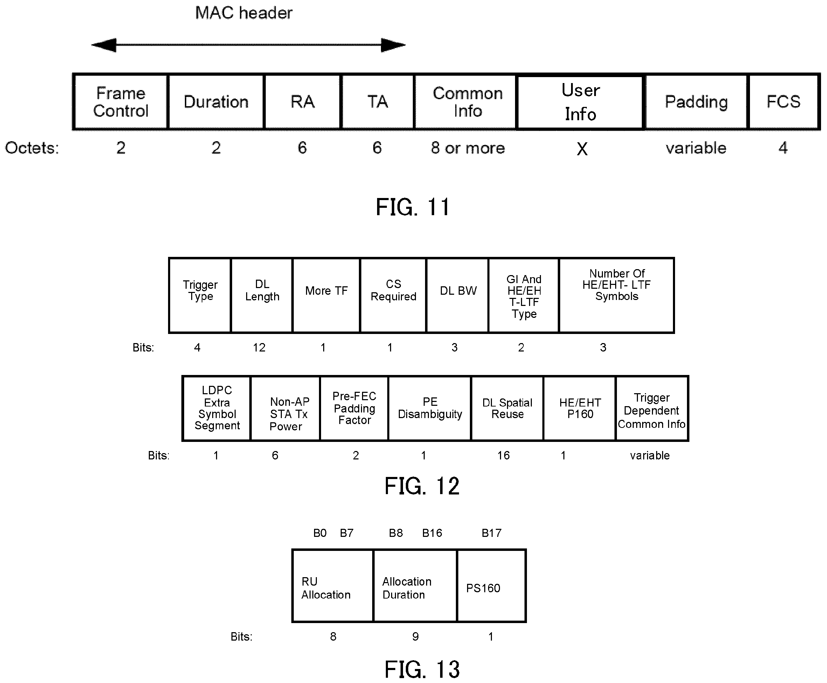

The Trigger frame for Non-AP transmission may have a different format from the Trigger frame for AP transmission. FIG. 11 illustrates an exemplary Trigger frame format for Non-AP transmission.

In the Trigger frame format for AP transmission, the connection destination is defined by a User Info List composed of multiple User Info fields. In the Trigger frame format for Non-AP transmission, the connection destination of the User Info field may be limited to the AP to which the Non-AP is connected. Thus, as illustrated in FIG. 11, the User Info List may be composed of one User Info field.

Note that, in a case where a Non-AP transmits a Trigger frame for Non-AP transmission to a plurality of APs, such as when the Non-AP requests notification of resource allocation request information or uplink quality information to an AP that performs a plurality of coordinated transmissions, the User Info List in the Trigger frame for Non-AP transmission may include a plurality of User Info fields.

Further, in the Trigger frame format for AP transmission, the frame defined in the Frame Control field of the MAC header is of a Trigger Subtype (Subtype subfield value is 0010) of Control Type (Type subfield value is 01). For the Trigger frame format for Non-AP transmission (for AP) in Embodiment 1, the same Type and Subtype as those for AP transmission may be used. Alternatively, a Type and/or Subtype different from those for AP transmission may be newly defined for Non-AP transmission.

For example, the Control Type (value of Type subfield is 01) may be configured, and an "AP Trigger Subtype" for triggering an AP may be newly defined using the Reserved bit (0000-0001) of the Subtype.

As described above, by changing the Type and/or Subtype for AP transmission (addressed to Non-AP) and Non-AP transmission (addressed to AP), it is possible to reduce the reception processing amount of Non-AP. For example, a Non-AP that has received a Trigger frame for Non-AP transmission (addressed to AP) can identify that the Trigger frame is addressed to AP by the MAC header, and thus can stop the subsequent reception processing.

In the Trigger frame format for Non-AP transmission (addressed to AP), the RA (Receiver Address or Receiving station Address) field may be configured to the MAC address of AP 200 to which Non-AP 100 is connected, in the case of being addressed to a connected AP. In a case where the Non-AP transmits a Trigger frame for Non-AP transmission to a plurality of APs, such as when the Non-AP requests the notification of resource allocation request information to an AP that performs a plurality of coordinated transmissions, a Broadcast address may be configured in the RA field.

### [Indication Format]

FIG. 12 illustrates an example of a Common Info field for Non-AP transmission.

In the Common Info field for Non-AP transmission, information to be included and subfield names may be changed from those in the Common Info field for AP transmission (see FIG. 4), such as UL information is changed to DL information and STA information is changed to AP information. For example, the UL Length subfield in FIG. 4 may be changed to a DL Length subfield that includes the value of the content of the L-SIG LENGTH field in the Preamble of the downlink signal (PPDU) to which the AP responds. Further, the UL BW subfield in FIG. 4 may be changed to a DL BW subfield that includes the value of the content of the EHT-SIG-A field in the Preamble of the downlink signal (PPDU) to which the AP responds. Note that the size of the DLBW subfield may be defined as a size with which a supported bandwidth can be indicated. Further, the AP TX Power subfield in FIG. 4 may be changed to a Non-AP STA TX Power subfield that includes the transmission power of Non-AP 100.

Further, in the Common Info field for Non-AP transmission, some subfields may be deleted in contrast to the Common Info field for AP transmission (see FIG. 4). For example, the Triggered TXOP Sharing Mode subfield in FIG. 4 may be deleted from the Common Info field in a case where the subfield is included in the User Info field. Further, the Reserved bit may be deleted.

Further, the Special User Info field for AP transmission (see FIG. 6) includes common information for a terminal, but in the Trigger frame for Non-AP transmission, the common information for a terminal may be included in the Common Info field. In that case, the Special User Info Field Flag may be deleted from the Common Info field for Non-AP transmission.

FIG. 13 illustrates an example of a User Info field for MU-RTS TXS for Non-AP transmission.

In contrast to the User Info field for AP transmission (see FIG. 5), in the User Info field for Non-AP transmission, unnecessary information (subfield) may be deleted. For example, as described above, in a case where the MAC address of the connection AP is included in the RA field, the AID12 subfield indicating the identification ID of the connection AP may be deleted. Further, the Reserved bit may be deleted.

Note that, in a case where the RA field includes a Broadcast address, a Subfield for indicating an ID for identifying an AP from among a plurality of APs may be added to the format in FIG. 13.

For coexistence with a Legacy STA that supports only an old standard, the MU-RTS TXS Trigger frame and the CTS frame for responding to the MU-RTS TXS Trigger frame may be transmitted by being included in a non-HT PPDU or a non-HT duplicate PPDU.

### [Sequence Example]

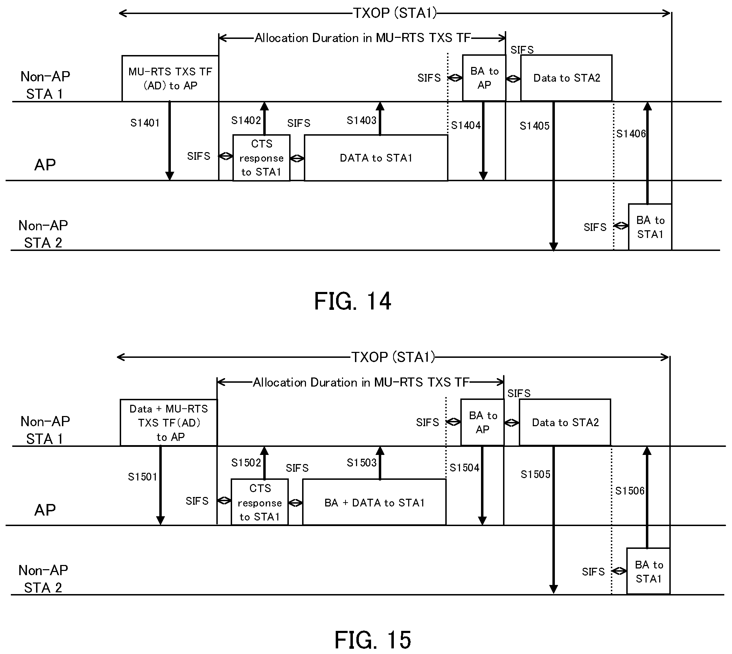

FIGS. 14 and 15 illustrate two exemplary sequences in which Non-AP 100 (Non-AP STA1 in the figures) notifies AP 200 (AP in the figures) of an MU-RTS TXS Trigger frame including an allocation period and indicates TXOP sharing to AP 200.

### [Sequence Example 1]

FIG. 14 illustrates a sequence example in which Non-AP 100 acquires the transmission right of TXOP sharing control information ("MU-RTS TXS TF" in the figure), configures TXOP, and allocates a part of or entire TXOP to AP 200 (TXOP sharing).

In FIG. 14, Non-AP 100 transmits an MU-RTS TXS Trigger frame in which the allocation period (referred to as "Allocation Duration in MU-RTS TXS TF" in the figure) is included in AD (S1401), and indicates TXOP Sharing to AP 200. The allocation period is configured by Non-AP 100 based on the resource request information of AP 200 acquired in advance from AP 200, in the same manner as in the example of FIG. 10.

AP 200 communicates within the allocation period indicated by Non-AP 100. AP 200 first transmits a CTS frame to Non-AP 100 to indicates the start of communication in the allocation period (S1402), and then transmits data (S1403). Non-AP 100 transmits a BA to AP 200 (S1404), and after the allocation period to AP 200 ends, Non-AP 100 which has acquired the TXOP acquires the remaining TXOP again. In FIG. 14, Non-AP 100 transmits data to another Non-AP STA2 in the remaining period of the re-acquired TXOP (S1405), and Non-AP STA2 transmits a BA to Non-AP 100 (S1406).

### [Sequence Example 2]

FIG. 15 illustrates a sequence example in which Non-AP 100 acquires the transmission right of data and TXOP sharing control information ("Data + MU-RTS TXS TF" in the figure), configure TXOP, and allocates a part of or entire TXOP to AP 200 (TXOP sharing).

In FIG. 15, Non-AP 100 multiplexes (A-MPDU) uplink data to AP 200 in addition to the MU-RTS TXS Trigger frame in which the allocation period ("Allocation Duration in MU-RTS TXS TF" in the figure) is included in AD (S1501), and indicates TXOP Sharing to AP 200. In FIG. 15, the processing is the same as that of FIG. 14 except that AP 200 responds with a BA for the uplink data to Non-AP 100 along with the data (S1503) after the transmission of the CTS frame (S1502).

As illustrated in the specific examples described above, Non-AP 100 appropriately controls the allocation period based on the resource request information of itself and AP 200, thereby enhancing the transmission efficiency.

### [Transmission Destination in TXOP Sharing]

Hereinafter, a method will be described in which Non-AP 100 (for example, TXS control information generator) generates control information for TXOP Sharing, transmits the control information to AP 200, and controls the transmission destination of AP 200 in the allocation period.

The TXS control information generated by the TXS control information generator may include information on the transmission destination of AP 200 in the allocation period. For example, Non-AP 100 may permit transmission that does not include Non-AP 100 itself in the allocation period to AP 200. Note that, in a case where AP 200 communicates with a Non-AP other than Non-AP 100, Non-AP 100 may permit transmission for only traffic having a high priority (for example, Low Latency traffic). Further, only in a case where the AP is an RD Responder, communication that does not include an RD Initiator may be permitted.

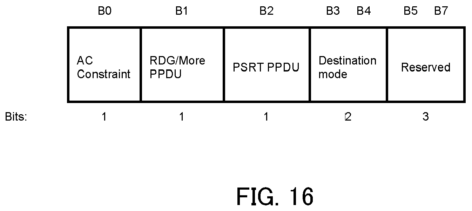

For example, the transmission destination information of AP 200 in the allocation period may be indicated in connection with control information (RDG) of the RD protocol. Specifically, as illustrated in FIG. 16, a part of the Reserved bit in the Control Information subfield in FIG. 5 may be used as information on the transmission destination of AP 200 in the allocation period (Destination mode subfield in FIG. 16), and the transmission destination of AP 200 may be indicated.

The transmission destination of AP 200 in the allocation period may be, for example, any of the following information.
00: Only Non-AP (Non-AP 100) that has shared
01: Non-AP (Non-AP 100) that has shared, or another Non-APs
10: Non-AP (Non-AP 100) that has shared, or APs that perform coordinated transmission different from AP (AP 200) that is Sharing
11: Non-AP (Non-AP 100) that has shared, other Non-APs, or APs that perform coordinated transmission and is different from AP (AP 200) that is Sharing

For example, in a case where Non-AP 100 is aware from the resource request information of AP 200 that AP 200 holds traffic with a high priority (for example, Low Latency traffic) for another Non-AP different from Non-AP 100, Non-AP 100 may permit AP 200 to communicate with another Non-AP during the allocation period.

Further, in a case where Non-AP 100 determines that a performance improvement effect can be expected by applying coordinated transmission by a plurality of APs, Non-AP 100 may permit an AP that performs coordinated transmission and is different from AP 200 to communicate in the allocation period.

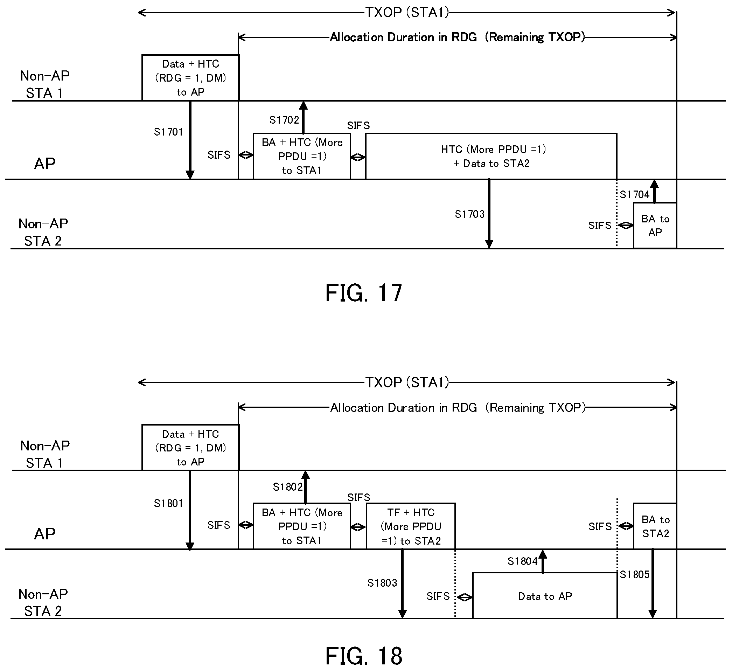

FIGS. 17 and 18 illustrate exemplary sequences in which Non-AP 100 (Non-AP STA1 in the figure), which is an RD initiator, notifies AP 200 (AP in the figure) of RDG and the transmission destination in the allocation period ("Allocation Duration in RDG (Remaining TXOP)" in the figure), and indicates TXOP sharing to AP 200, which is an RD responder.

FIGS. 17 and 18 illustrate cases where Non-AP 100 acquires the transmission right of control information including an indication of TXOP sharing (RDG = 1) and information on the transmission destination (DM) along with data, and configures the TXOP ("Data + HTC" in the figure). Then, FIGS. 17 and 18 illustrates operations in which Non-AP 100 allocates (TXOP sharing) a part of or entire remaining TXOP to AP 200.

In FIG. 17, Non-AP 100 indicates TXOP Sharing to AP 200 by configuring the value of the RDG subfield to 1 (RDG = 1) and including the transmission destination (DM) of AP 200 in the allocation period, in addition to the uplink data to AP 200, for example, using the format illustrated in FIG. 16 (S1701). The transmission destination of AP 200 in the allocation period is configured by Non-AP 100 based on the resource request information acquired from AP in advance.

FIG. 17 illustrates that Non-AP 100 permits, for AP 200, communication with another Non-AP different from Non-AP 100. That is, Non-AP 100 permits, by the RD protocol, transmission that does not include an RD initiator in a Response burst. AP 200 transmits a BA to Non-AP 100 (S1702), communicates with a permitted counterpart within the allocation period (S1703), and receives a BA (S1704). In FIG. 17, AP 200 transmits Low Latency traffic to Non-AP STA2.

In FIG. 18, in the same manner as FIG. 17, Non-AP 100 permits communication with a Non-AP different from Non-AP 100. In FIG. 18, AP 200, which is an RD responder, indicates the transmission of uplink data to Non-AP (Non-AP STA2) different from Non-AP 100, using a Trigger frame (for example, Basic Trigger frame) (S1803), and Non-AP STA2 transmits the uplink data (S1804). Note that, similarly to the specific example described above, this uplink transmission may be limited to Low Latency traffic.

Here, in the RD protocol of 11n, in a case where the RD responder is an AP, the AP can transmit only a Basic Trigger frame with a Trigger Type of Basic. However, in the present embodiment, in a case where communication with another Non-AP in the allocation period is permitted, the AP, which is an RD responder, may be allowed to transmit an MU-RTS TXS Trigger frame. For example, by using the MU-RTS TXS Trigger frame, the AP can TXOP-share the resource in the allocation period with a Non-AP (a Non-AP other than Non-AP 100) that holds large-size Low Latency traffic.

Note that, in a case where a Non-AP is an RD Responder, the PPDU transmission (Response Burst) in the allocation period may always include the transmission to the RD initiator as a specification. In a case where an AP is an RD Responder, the PPDU transmission in the allocation period need not include the RD initiator as a specification.

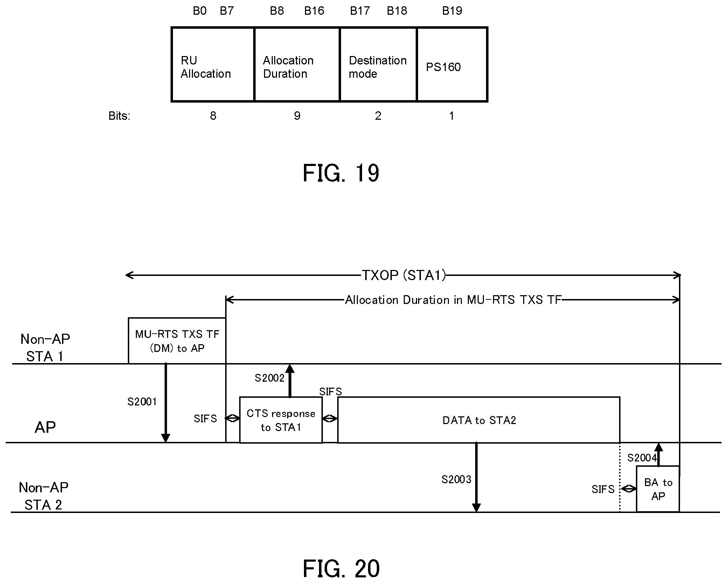

Further, for example, Non-AP 100 may indicate the transmission destination information of AP 200 in the allocation period by including the information in an MU-RTS TXS Trigger frame for Non-AP transmission. Specifically, as illustrated in FIG. 19, Non-AP 100 may indicate the transmission destination of AP 200 (Allocation Duration subfield in the figure) in the allocation period using the Reserved bit in the User Info field illustrated in FIG. 5. For example, the transmission destination of AP 200 in the allocation period is the same as that in the specific example of the RD protocol described above. FIG. 19 illustrates an example in which the AID12 subfield indicating the identification ID of the connection AP and the Reserved bit are deleted.

FIG. 20 illustrates an exemplary sequence in which Non-AP 100 (Non-AP STA1 in the figure) notifies AP 200 (AP in the figure) of an MU-RTS TXS Trigger frame including a transmission destination of AP 200 in the allocation period ("Allocation Duration in MU-RTS TXS TF" in the figure) and indicates TXOP sharing to AP 200.

In FIG. 20, Non-AP 100 acquires the transmission right of TXOP sharing control information ("MU-RTS TXS TF" in the figure) and configures the TXOP. Then, FIG. 20 illustrates the operation in which Non-AP 100 allocates a part of or entire remaining TXOP (performs TXOP sharing) to AP 200.

In FIG. 20, Non-AP 100 transmits an MU-RTS TXS Trigger frame including the transmission destination of AP 200 in the allocation period (S2001), and indicates TXOP Sharing to AP 200. The transmission destination of AP 200 in the allocation period is configured to a communication destination that holds traffic with a high priority, based on the resource request information of AP 200 acquired in advance from AP 200 by Non-AP 100, as in the example described above.

In FIG. 20, AP 200 is communicating with a Non-AP (Non-AP STA2) different from Non-AP 100. That is, an example is shown in which Non-AP 100 permits transmission that does not include Non-AP 100 in the allocation period. AP 200 transmits CTS to Non-AP 100 (S2002), communicates with a permitted counterpart within the allocation period (S2003), and receives a BA (S2004). In FIG. 20, AP 200 transmits Low Latency traffic to Non-AP STA2.

As illustrated in the specific example described above, AP 200 can transmit traffic with a high priority (Low latency traffic) to another Non-AP 100 in the allocation period from Non-AP 100. Further, by Non-AP 100 permitting communication of AP that performs another coordinated transmission during the allocation period, the throughput can be improved through coordinated communication from multiple APs.

### [Traffic Type of TXOP Sharing]

Hereinafter, a method will be described in which Non-AP 100 transmits control information for TXOP Sharing generated by Non-AP 100 (for example, TXS control information generator) to AP 200 and controls a type of traffic (TID or the like) communicable in the allocation period.

The TXS control information generated by the TXS control information generator includes information on the type of traffic communicable in the allocation period. For example, Non-AP 100 can limit communication to traffic with a high priority (for example, Low Latency traffic) in the allocation period allocated to AP 200.

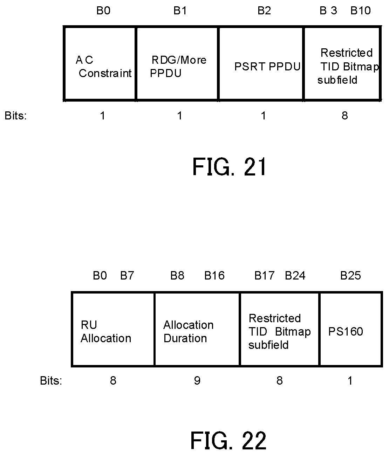

For example, information on the type of traffic communicable in the allocation period may be indicated in association with control information (RDG) of the RD protocol. Specifically, as illustrated in FIG. 21, the Reserved bit in the Control Information subfield may be used to indicate a type of traffic (Restricted TID Bitmap subfield in the figure) communicable in the allocation period.

For the type of traffic communicable in the allocation period, for example, whether to transmit may be indicated for each TID by a bitmap format. In a case where the Restricted TID Bitmap subfield is 11000000, only traffic data with TID numbers 0 and 1 can be UL/DL transmitted in the allocation period. Since TID is related to the allowable delay amount, specifying TID makes it possible to transmit, in the allocation section, only traffic for which low latency is required. Note that, a type of communicable traffic may be indicated for UL and DL separately. The type of traffic need not be eight types (the bitmap need not be eight bits).

Note that, in a case where the value of the Control ID subfield illustrated in FIG. 2 is different from the size of the Control Information subfield in a case of indicating CAS, a new format of the Control Information subfield may be defined as a new Control ID for Non-AP and AP that support Beyond 11be.

Further, for example, information on a type of traffic communicable in the allocation period may be included in an MU-RTS TXS Trigger frame for Non-AP transmission, and may be indicated. Specifically, as illustrated in FIG. 22, a communicable traffic type (Restricted TID Bitmap subfield in FIG. 22) may be indicated using a part of the Reserved bit in the User Info field illustrated in FIG. 5.

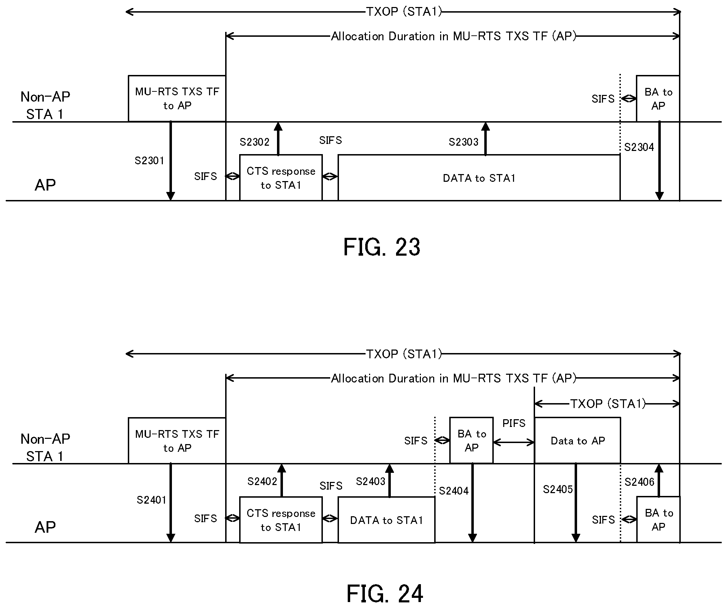

FIGS. 23 and 24 illustrate exemplary sequences in which Non-AP 100 (Non-AP STA1 in the figures) notifies AP 200 (AP in the figures) of an MU-RTS TXS Trigger frame including a type of traffic communicable in the allocation period and indicates TXOP sharing to AP 200.

In FIGS. 23 and 24, Non-AP 100 acquires the transmission right of TXOP sharing control information ("MU-RTS TXS TF" in the figures) and configures the TXOP. Then, Non-AP 100 allocates a part of or entire remaining TXOP (performs TXOP sharing) to AP 200.

In FIG. 23, Non-AP 100 transmits an MU-RTS TXS Trigger frame including a type of traffic communicable in the allocation period ("Allocation Duration in MU-RTS TXS TF" in the figure) (S2301), and indicates TXOP Sharing to AP 200. As the type of traffic communicable in the allocation period, the type of traffic (TID) with a high priority among the traffic for AP 200 or for another Non-AP from AP 200 is configured by Non-AP 100 based on the resource request information of AP 200 acquired in advance from AP 200.

In FIG. 23, Non-AP 100 configures Low Latency traffic as a type of traffic communicable in the allocation period. AP 200 transmits the indicated traffic type within the allocation period (S2303).

Note that, in a case where Low latency traffic held by AP is low with respect to the allocation period indicated from Non-AP 100, such as a case where the allocation period is not appropriately configured, the AP does not transmit a PPDU even though the allocation period remains. As illustrated in FIG. 24, when Non-AP 100 that has performed TXOP sharing does not detect a signal for a predetermined time (for example, PIFS: Point coordination function (PCF) Inter Frame Space) in carrier sensing, Non-AP 100 re-acquires the TXOP and transmits data to AP 200 (S2405). Thus, only traffic transmission with a high priority is performed in the allocation period.

As illustrated in the specific example described above, Non-AP 100 can indicate, to AP 200, transmission of traffic with a higher priority (Low latency traffic) than the traffic held by Non-AP 100 itself.

### [Resource Request Information for TXOP Sharing]

Hereinafter, a method in which Non-AP 100 (for example, resource request information holder) requests resource request information of AP will be described.

An AP is allowed to report the transmission buffer state to a Non-AP. The resource request information indicated from AP 200 to Non-AP 100 and generated by the resource request information holder is, for example, any of a request flag, a request allocation time, and transmission buffer information of AP.

The request flag is flag information on whether to request resource allocation to Non-AP 100.

The request allocation time is the time required for resource allocation in a case of a predetermined bandwidth (for example, 20 MHz).

The transmission buffer information of the AP is at least one of a destination of a buffer held by the AP, an AC or a TID of each buffer, a queue size of each AC and TID, and/or a delay budget.

The resource request information may be individual information for each of a plurality of Non-APs 100 connected to AP 200. For example, the resource request information may be a set of the terminal ID (Association identifier) of Non-AP 100 and a flag indicating whether to request resource allocation. Alternatively, the resource request information may be the bitmap of the terminal ID and may be information on whether to request resource allocation.

For the flag information on whether to request resource allocation, a Null Data Packet (NDP) Feedback Report by which a Non-AP transmits resource request information to an AP may be reused. That is, by frequency-multiplexing flag information for a plurality of Non-APs into a predetermined Tone in the channel, AP 200 may transmit the flag information to the plurality of Non-APs 100 with one PPDU.

Further, the resource request information may be common information for a plurality of Non-APs 100 connected to AP 200. For example, based on the total buffer amount of a plurality of Non-APs 100 connected to AP 200, a common flag for the plurality of Non-APs 100 may be configured. In this case, for example, AP 200 may inform the plurality of Non-APs 100 to be connected of a resource allocation request as broadcast information using a beacon.

The transmission buffer information of the AP may include transmission buffer information of another Non-AP connected to the AP.

According to the specific example described above, Non-AP 100 can grasp the buffer state of AP 200 and the request for resource allocation by grasping the resource request information of AP 200. Accordingly, Non-AP 100 can appropriately allocate the necessary resources in TXOP Sharing.

Further, by configuring a request flag for resource allocation as the resource request information, Non-AP 100 can grasp the resource allocation request of AP 200 with a small overhead. By configuring the request allocation time or the transmission buffer information held by AP 200 as the resource request information, the signaling amount (overhead) increases compared to the case of the request flag. However, since Non-AP 100 can grasp the detailed buffer state, the allocation period for TXOP sharing to AP 200 can be calculated more accurately.

The resource request information may be indicated to AP 200 after Non-AP 100 acquires the TXOP. For example, AP 200 may indicate the resource request information by multiplexing (A-MPDU) the resource request information when transmitting an ACK to Non-AP 100.

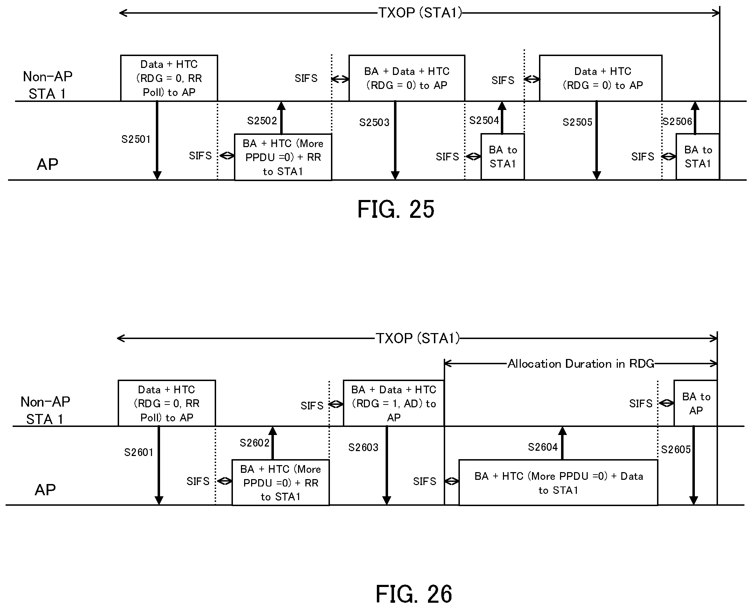

For example, as illustrated in FIGS. 25 and 26, after acquiring a TXOP, Non-AP 100 (Non-AP STA1 in the figure) may request AP 200 to include resource request information (RR (Resource Request) in the figure) when transmitting an ACK (BA in the figure). In FIGS. 25 and 26, Non-AP 100 transmits, in addition to data addressed to AP 200, an RDG subfield with a value set to 0 ("RDG = 0" in the figures) and information that prompts the transmission of resource request information (for example, referred to as an RR Poll signal ("RR Poll" in the figure)) to AP 200 (S2501, S2601).

AP 200 transmits, in addition to an ACK, resource request information to Non-AP 100 in accordance with an indication from Non-AP 100 (S2502, S2602).

Non-AP 100 determines whether to implement TXOP sharing within the acquired TXOP based on the resource request information from AP 200.

FIG. 25 illustrates a sequence in a case where the priority of data held by AP 200 is lower than the priority of data held by Non-AP 100. In this case, Non-AP 100 does not perform TXOP sharing, prioritizes the data held by Non-AP 100, and transmits the data held by Non-AP 100 to AP 200 in the remaining TXOP (S2503, S2505).

FIG. 26 illustrates a sequence in a case where the priority of data held by AP 200 is higher than the priority of data held by Non-AP 100 (for example, in a case where AP 200 holds Low Latency traffic). In this case, Non-AP 100 performs TXOP sharing (S2603) and prioritizes the transmission of data held by AP 200 (S2604).

According to the specific example described above, Non-AP 100 can appropriately perform TXOP sharing when AP 200 holds traffic with a higher priority than that of Non-AP 100.

### [Variation]

In TXOP Sharing, implementations described above can be combined.

For example, Non-AP 100 can provide an allocation period for a predetermined traffic type for each transmission destination. For example, Non-AP 100 can provide a predetermined allocation time for AP 200 and provide a further predetermined allocation time for another AP. For example, Non-AP 100 can provide, to AP 200, a predetermined allocation time for Non-AP STA1 and another predetermined allocation time for Non-AP STA2. For example, the resource request information may be configured as buffer information for each traffic type per STA. Further, the communication apparatus may be configured to switch between a Non-AP STA and an AP STA.

The names of frames, signals, and formats may vary. The resource request information may have another name. For example, the name may be resource information or resource request.

The names of fields and subfields may have different names. The User Info field in the Trigger frame transmitted by Non-AP 100 may have a different name. For example, the name may be an AP Info field. For example, in the case of performing MAP coordination transmission, there may be a plurality of AP Info fields.

The Trigger frame transmitted by Non-AP 100 may have a different format (data type or size) from the Trigger frame transmitted by AP 200. For example, the Trigger Type that can be configured by Non-AP 100 may be a part of the Trigger Type that can be configured by AP 200. For example, the Trigger frame transmitted by Non-AP 100 may be limited to only Basic and MU-RTS. By limiting the function, the implementation of the Trigger frame by Non-AP becomes easier.

An HT Control field including an RDG/More PPDU subfield may be newly defined. For example, a Control ID may be newly added by utilizing the Reserved bit in the A-Control field, and a new Control Information subfield may be defined.

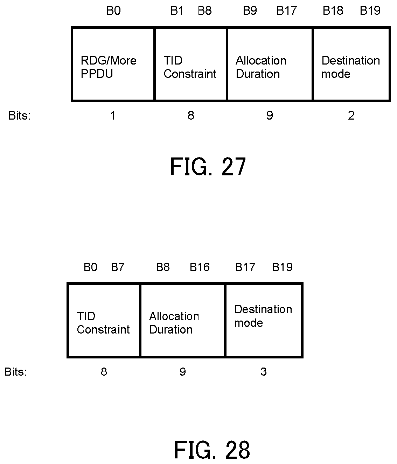

For example, as illustrated in FIG. 27, a Control Information subfield including at least one of a communicable traffic ID (TID Constraint subfield in FIG. 27), an allocation period (Allocation Duration subfield in FIG. 27), and communication destination information in the allocation period (Destination mode subfield in FIG. 27) may be newly defined in addition to the RDG/More PPDU subfield indicating TXOP sharing.

Further, as illustrated in FIG. 28, the RDG/More PPDU subfield indicating TXOP sharing need not include the RDG/More PPDU subfield included in the communication destination information (Destination mode subfield in FIG. 28) in the allocation period, and a Control Information subfield in which the RD protocol can be realized may be defined.

In the present disclosure, format examples using the RD protocol and the MU-RTS TXS Trigger frame have been described, but the format is not limited thereto.

For example, the format may be based on an RTS frame. The MAC header of the RTS frame does not include an HT Control field (size is 0). For example, in Beyond 11be, a format in which the MAC header of the RTS frame includes an HT Control field may be defined. Alternatively, the HT Control field may be included by wrapping the RTS frame in the Control Wrapper frame.

Further, a new RTS frame in which a Control Information subfield as illustrated in FIG. 27 or FIG. 28 is defined in an A-Control subfield included in the HT Control field may be used to realize TXOP sharing. Alternatively, an RTS TXS frame in which a field as shown in FIG. 27 or FIG. 28 is added to the content of the RTS frame may be defined as a new Control frame. These frames based on the RTS frame may be used instead of the MU-RTS TXS Trigger frame in the specific example described above.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

The technique of implementing an integrated circuit is not limited to the LSI and may be realized by using a dedicated circuit, a general-purpose processor, or a special-purpose processor. In addition, a Field Programmable Gate Array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include a radio frequency (RF) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may include a device such as a controller or a sensor which is coupled to a communication device performing a function of communication described in the present disclosure. For example, the communication apparatus may include a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A Non-Access Point Station (Non-AP STA) according to an embodiment of the present disclosure includes: a controller, which in operation, generates a signal indicating allocation of an acquired resource whose allocation period has been specified; and a radio transceiver, which in operation, transmits the generated signal.

The signal of the Non-AP STA according to the embodiment of the present disclosure is a signal permitting transmission to a transmission destination not including the Non-AP STA.

The signal of the Non-AP STA according to the embodiment of the present disclosure is a signal permitting transmission of a predetermined traffic type in a case where the transmission destination does not include the Non-AP STA.

The signal of the Non-AP STA according to the embodiment of the present disclosure is a signal permitting transmission to another Access Point Station (AP STA).

The signal of the Non-AP STA according to the embodiment of the present disclosure is a signal for which the Non-AP STA indicates a transmission destination.

The signal of the Non-AP STA according to the embodiment of the present disclosure is a signal indicating, to an AP STA, a communicable traffic identifier in the allocation period.

In the Non-AP STA according to the embodiment of the present disclosure, the controller acquires resource request information from an AP STA.

The resource request information of the Non-AP STA according to the embodiment of the present disclosure is a request flag indicating whether to request a resource or not.

The resource request information of the Non-AP STA according to the embodiment of the present disclosure is an allocation time in a case of a predetermined bandwidth.

The resource request information of the Non-AP STA according to the embodiment of the present disclosure is transmission buffer information of the AP STA.

The resource request information of the Non-AP STA according to the embodiment of the present disclosure is included in an acknowledgement.

In a communication method according to an embodiment of the present disclosure, a Non-AP STA generate a signal indicating allocation of an acquired resource whose allocation period has been specified, and transmits the generated signal.

The disclosure of Japanese Patent Application No. 2022-131164 filed on August 19, 2022, including the specification, drawings and abstract, is incorporated herein by reference in its entirety.

### Industrial Applicability

An embodiment of the present disclosure is useful for radio communication systems.

### Reference Signs List

100 Non-AP 100
101, 205 Scheduler
102 TXS control information generator
103 Data generator
104 MAC information generator
105, 207 Error correction encoder
106, 208 Modulator
107, 201 Radio transceiver
108, 202 Demodulator
109, 203 Error correction decoder
110 Resource request information holder
200 AP 200
204 TXS control information acquirer
206 Data generator

## Claims

1. A Non-Access Point Station (Non-AP STA), comprising:
a controller, which in operation, generates a signal indicating allocation of an acquired resource whose allocation period has been specified; and
a radio transceiver, which in operation, transmits the generated signal.

2. The Non-AP STA according to claim 1, wherein
the signal is a signal permitting transmission to a transmission destination not including the Non-AP STA.

3. The Non-AP STA according to claim 2, wherein
the signal is a signal permitting transmission of a predetermined traffic type in a case where the transmission destination does not include the Non-AP STA.

4. The Non-AP STA according to claim 2, wherein
the signal is a signal permitting transmission to another Access Point Station (AP STA).

5. The Non-AP STA according to claim 2, wherein
the signal is a signal for which the Non-AP STA indicates a transmission destination.

6. The Non-AP STA according to claim 1, wherein
the signal is a signal indicating, to an AP STA, a communicable traffic identifier in the allocation period.

7. The Non-AP STA according to claim 1, wherein
the controller acquires resource request information from an AP STA.

8. The Non-AP STA according to claim 7, wherein
the resource request information is a request flag indicating whether to request a resource or not.

9. The Non-AP STA according to claim 7, wherein
the resource request information is an allocation time in a case of a predetermined bandwidth.

10. The Non-AP STA according to claim 7, wherein
the resource request information is transmission buffer information of the AP.

11. The Non-AP STA according to claim 7, wherein
the resource request information is included in an acknowledgement.

12. A communication method, comprising:
generating, by a Non-AP STA, a signal indicating allocation of an acquired resource whose allocation period has been specified; and
transmitting, by the Non-AP STA, the generated signal.
